# EUROPÄISCHE PATENTSCHRIFT

(11) **EP 0 351 701 B1**
(45) Veröffentlichungstag und Bekanntmachung des Hinweises auf die Patenterteilung: **02.06.1993**
(21) Anmeldenummer: 89112733.4
(22) Anmeldetag: 12.07.1989
(51) Int. Cl.: G01L 9/12, G01L 7/08

(54) **Drucksensor und Verfahren zu seiner Herstellung**
Pressure transducer and its manufacturing process
Capteur de pression et son procédé de fabrication

(30) Priorität: 22.07.1988 DE 3825029; 19.01.1989 DE 3901492
(43) Veröffentlichungstag der Anmeldung: 24.01.1990
(73) Patentinhaber: Endress u. Hauser GmbH u. Co., D-79689 Maulburg (DE)
(72) Erfinder: Hegner, Frank, Dr., D-7864 Maulburg (DE); Dittrich, Gerhard, Dr., D-7850 Lörrach (DE); Klähn, Thomas, D-7853 Steinen (DE)
(74) Vertreter: Leiser, Gottfried, Dipl.-Ing.

(56) Entgegenhaltungen:
- DE-A- 2 706 505
- DE-A- 3 137 219
- DE-A- 3 404 262

## Beschreibung

Die Erfindung betrifft einen Drucksensor mit einem Grundkörper und einer Membran, die unter Bildung einer Kammer in einem definierten Abstand parallel zueinander zusammengefügt sind, wobei wenigstens eines der beiden zusammengefügten Teile aus Keramik, Glas, Metall oder einem einkristallinen Material besteht, sowie ein Verfahren zur Herstellung eines solchen Drucksensors.

Aus der DE-A 27 09 945 sind Drucksensoren dieser Art bekannt, bei denen die Membran und der Grundkörper durch eine geschmolzene, den Abstand definierende Glasfritte miteinander verbunden sind. Diese Art der Verbindung hat den Nachteil, daß ihre mechanische Festigkeit, Belastbarkeit und Temperaturwechselbeständigkeit gering sind. Ferner eignet sich Glasfritte nur bedingt für die Verbindung von Teilen aus Nichtoxidkeramik und höchstreiner Oxidkeramik, die das bevorzugte Material für den Grundkörper und die Membran von Drucksensoren der vorstehend angegebenen Art ist.

Bei einem aus der DE-A-34 04 262 bekannten gattungsgleichen Drucksensor, dessen Grundkörper und Membran aus geschmolzenem Quarz, Bergkristall, Glas, Keramik oder Saphir bestehen, ist die Verbindung mittels einer Schicht aus einem Verbindungswerkstoff, wie niedrigschmelzendem Glas, einem beliebigen Glas, einem organischen Verbindungsmittel oder Metall gebildet, wobei ein Verfahren angewendet werden kann, das Gebrauch macht von einer eutektischen Reaktion, oder ein Verfahren mittels anodischen Bondings. Grundkörper und Membran werden also bei wenigstens einigen dieser Möglichkeiten thermisch miteinander verbunden.

Aus der DE-A-27 06 505 ist es bekannt, den Grundkörper und die Membran eines Drucksensors, die beide aus Quarz bestehen, mittels einer Lötleiste aus einer eutektischen Zinn-Gold-Legierung zu verlöten. Das Lot wird mittels geeigneter Edelstahlmasken als dünne Filme auf die beiden zu verlötenden Teile aufgebracht. Zur Einstellung des erforderlichen Abstands zwischen Grundkörper und Membran sind die beiden Teile mit vorspringenden Böcken versehen, oder eines der beiden Teile weist eine um den Umfang verlaufende ringförmige Rippe auf, in die ein Kanal eingeätzt ist, in welchem sich eine Lötleiste befindet.

Aufgabe der Erfindung ist die Schaffung eines Drucksensors der eingangs angegebenen Art, der sehr robust und insbesondere nicht temperaturschockempfindlich ist und Bestandteile aus schwer fügbaren Materialien, wie hochreiner Oxidkeramik, enthalten kann, sowie von Verfahren zur Herstellung eines solchen Drucksensors.

Der Drucksensor nach der Erfindung ist dadurch gekennzeichnet, daß der Grundkörper und die Membran durch ein zugleich als Abstandshalter dienendes Formteil aus Aktivlot oder Kupfer thermisch miteinander verbunden sind.

Zur Herstellung des Drucksensors nach der Erfindung eignen sich insbesondere zwei an sich bekannte Verfahren: Das Aktivlöten und das unter der Bezeichnung "DCB" ("direct copper bonding") bekannte direkte Verbinden von Kupfer mit Oxidkeramik oder Saphir. Das Aktivlöten von Keramik ist beispielsweise in der Zeitschrift "Metall", 27. Jahrgang, März 1973, Seiten 259 bis 265, beschrieben. Das DGB-Verfahren ist aus "DVS-Berichte", Band 66, 10/1980, Seiten 33 bis 36, bekannt.

Beide Verfahren eignen sich hervorragend für den bevorzugten Fall, daß die Membran und der Grundkörper des Drucksensors aus Keramik, insbesondere aus hochreiner Oxidkeramik, wie Aluminiumoxidkeramik, bestehen. Durch Aktivlöten können darüber hinaus auch Teile aus anderen Materialien, wie Nichtoxidkeramik, einkristallinen Materialien oder Glas, ohne vorhergehende Metallisierung, sowie auch metallische oder metallisierte Teile verlötet werden, wobei in allen Fällen kein Flußmittel erforderlich ist.

Wenn der Drucksensor durch Aktivlöten hergestellt wird, besteht das Formteil aus Aktivlot.

Aktivlot besteht aus einem Lotmaterial, meistens einem Hartlot, wie Ag, Ag-Cu oder Ag-Cu-In, dem wenigstens ein reaktives Element, wie Ti, Zr, Be, Hf oder Ta, zulegiert ist. Dabei hat sich Ti als wirksamstes Legierungselement erwiesen. Das reaktive Element benetzt die Oberfläche der zu verlötenden Teile während des Lötens. Wenn die zu verlötenden Teile aus Oxidkeramik bestehen, bewirkt die hohe Affinität des reaktiven Elements zum Sauerstoff eine Reaktion mit der Keramik, was zur Bildung von Mischoxiden und freien chemischen Valenzen führt.

Ein bevorzugtes Verfahren zur Herstellung des Drucksensors mit einem Formteil aus Aktivlot besteht nach der Erfindung darin, daß der Grundkörper und die Membran ohne vorhergehende Metallisierung mit dem dazwischen angeordneten Formteil in ein Vakuum oder in eine definierte Gasatmosphäre mit einem Druck von höchstens 0,1 mbar gebracht und darin bis zum vollständigen Durchschmelzen des Aktivlots erhitzt werden.

Wenn die Membran und der Grundkörper aus Oxidkeramik oder Saphir bestehen und der Drucksensor nach dem DGB-Verfahren hergestellt wird, besteht das Formteil aus Kupfer, das durch eine sich an der Oberfläche ausbildende eutektische Schmelze mit den beiden Teilen verbunden ist.

Ein bevorzugtes Verfahren zur Herstellung des Drucksensors nach dem DGB-Verfahren besteht nach der Erfindung darin, daß der Grundkörper und die Membran ohne vorhergehende Metallisierung mit dem dazwischen angeordneten Formteil aus Kupfer in eine Inertatmosphäre mit geringem Sauerstoffanteil gebracht und darin bis auf eine Temperatur erhitzt werden, die unter dem Schmelzpunkt von Kupfer liegt und bei der sich an der Oberfläche des Formteils eine eutektische Schmelze bildet.

Sowohl die durch Aktivlöten als auch die nach dem DGB-Verfahren hergestellten Drucksensoren zeichnen sich durch hohe mechanische Festigkeit, Belastbarkeit und Temperaturwechselbeständigkeit sowie durch eine gute und sichere Vakuumdichtigkeit aus. Die Fertigungsverfahren sind sowohl beim Aktivlöten als auch beim DGB-Verfahren infolge der Verwendung des zugleich als Abstandshalter dienenden Formteils besonders einfach; die zu verbindenden Teile werden unter Einfügung des Formteils einfach aufeinandergelegt und erhitzt. Insbesondere entfallen alle Maßnahmen, um das Verbindungsmaterial in Form von Schichten auf die zu verbindenden Teile aufzubringen, sowie zusätzliche Maßnahmen, um die zu verbindenden Teile während des Verbindungsvorgangs in einem definierten Abstand zu halten. Schließlich kann die Qualität der Fügung schnell und einfach mit Röntgendurchstrahlung geprüft werden.

Die Anwendung des DCB-Verfahrens ist auf die Fügung von Oxidkeramiken und Saphir beschränkt, doch ergibt dieses Verfahren den Vorteil, daß das Formteil bei der Fügetemperatur eine hohe Geometrietreue beibehält, weil es nicht durchgeschmolzen, sondern nur an der Oberfläche angeschmolzen wird. Dadurch lassen sich eine sehr gute Abstandskonstanz und Parallelität von Grundkörper und Membran ohne zusätzliche Maßnahmen erzielen.

Demgegenüber besteht ein besonderer Vorteil des Aktivlötens darin, daß damit praktisch alle Materialien fügbar sind, wie Oxidkeramiken, Nichtoxidkeramiken, Gläser, Einkristalle und Metalle.

In beiden Fällen ist es überraschend, daß trotz der sehr unterschiedlichen Temperaturabhängigkeiten der Ausdehnungskoeffizienten von Metall und Keramik ein Metallot zur Fügung von Keramikteilen für Drucksensoren verwendet werden kann. Bei den nach der Erfindung hergestellten Drucksensoren konnten jedoch in einem großen Temperaturbereich keine nachteiligen Auswirkungen auf das Sensorverhalten, wie Kriechen, Hysterese oder Empfindlichkeitsänderungen, festgestellt werden.

Ein Ausführungsbeispiel der Erfindung wird anhand der Zeichnung erläutert. In der Zeichnung zeigt:
- Fig. 1: eine Draufsicht auf einen Drucksensor nach der Erfindung und
- Fig. 2: eine Schnittansicht des Drucksensors von Fig. 1 entlang der Schnittlinie II-II.

Der in der Zeichnung dargestellte Drucksensor 10 hat eine Membran 11 in Form einer kreisrunden Scheibe mit planparallelen Flächen, die rings um den Umfang mit einem kreisrunden Grundkörper 12 in einem definierten Abstand d zusammengefügt ist, so daß zwischen der ebenen Oberseite des Grundkörpers 12 und der gegenüberliegenden Fläche er Membran 11 eine Kammer 13 gebildet ist. Die Membran 11 kann aus Keramik, Glas oder einem einkristallinen Material bestehen. Desgleichen kann der Grundkörper 12 aus Keramik, Glas oder einem einkristallinen Material bestehen, wobei jedoch die Materialien, aus denen die Membran 11 und der Grundkörper 12 bestehen, voneinander verschieden sein können. Die Membran 11 ist elastisch, so daß sie sich unter einem darauf einwirkenden Druck verformen kann. Der Grundkörper 12 kann massiv und starr sein, er kann aber auch, falls erwünscht, in gleicher Weise wie die Membran 11 als flache elastische Scheibe ausgebildet sein.

An den einander zugewandten Flächen der Membran 11 und des Grundkörpers 12 sind innerhalb der Kammer 13 kreisförmige Leiterschichten 14 bzw. 15 aus Metall angebracht, die sich im Abstand gegenüberliegen. Mit der Leiterschicht 14 ist ein Anschlußleiter 16 verbunden, der gasdicht durch die Membran 11 nach außen geführt ist. In gleicher Weise ist mit der Leiterschicht 15 ein Anschlußleiter 17 verbunden, der gasdicht durch den Grundkörper 12 nach außen geführt ist. Die beiden Leiterschichten bilden die Elektroden eines Kondensators, dessen Kapazität von dem Abstand zwischen den Leiterschichten abhängt. Wenn sich die Membran 11 unter der Einwirkung eines Drucks verformt, ändert sich der Abstand zwischen den beiden Leiterschichten und damit die Kapazität des Sensors. Die Kapazität des Sensors, die mittels einer an die Anschlußleiter 16 und 17 angeschlossenen elektronischen Schaltung gemessen werden kann, ist daher ein Maß für den auf die Membran 11 einwirkenden Druck. Wenn eines der beiden Teile 11, 12 aus Metall besteht, kann es selbst die betreffende Kondensatorelektrode bilden.

Die Besonderheit des dargestellten Drucksensors besteht in der Art und Weise, wie die Membran 11 und der Grundkörper 12 zusammengefügt sind. Dies geschieht durch ein ringförmiges Formteil 20 aus Aktivlot oder Kupfer, das eine Verbindung wischen der Membran 11 und dem Grundkörper herstellt und zugleich als Abstandshalter dient, indem es die Membran 11 in dem definierten Abstand d von dem Grundkörper 12 hält. Zur Herstellung der Verbindung wird ein thermisches Verfahren angewendet, das eine direkte Verbindung der Membran 11 und des Grundkörpers 12 mit dem Formteil 20 ohne vorheriges Aufbringen einer Metallisierung und ohne Anwendung eines Flußmittels ermöglicht.

Hierfür kommen insbesondere zwei an sich bekannte Verfahren in Betracht:
1. das Aktivlöten, mit dem sowohl Metalle als auch Nichtmetalle, wie Keramik, Einkristalle und Glas, direkt verlötet werden können;
2. das unter der Bezeichnung "DCB" ("direct copper bonding") bekannte direkte Verbinden von Kupfer mit Oxidkeramik oder Saphir für den Fall, daß die Membran 11 und der Grundkörper 12 aus diesen Materialien bestehen.

In beiden Fällen wird eine mechanisch äußerst feste und vollkommen gasdichte Verbindung zwischen der Membran 11 und dem Grundkörper 12 über das Formteil 20 erhalten, so daß die Kammer 13 vollkommen gasdicht nach außen abgeschlossen ist.

Die beiden zuvor erwähnten Verfahren werden nachfolgend näher erläutert:

### 1. Aktivlöten

Aktivlot ist ein Lot, das wenigstens ein stark reaktives Element, wie Ti, Zr, Be, Hf oder Ta, enthält. Diese reaktiven Elemente benetzen die Oberfläche der zu verlötenden Teile während des Lötens. Falls diese Teile aus Oxidkeramik bestehen, bewirkt die hohe Affinität der reaktiven Elemente zum Sauerstoff eine Reaktion mit der Keramik, was zur Bildung von Mischoxiden und freien chemischen Valenzen führt.

Die reaktive Komponente des Lotes ist in eine Matrix anderer Legierungselemente, wie Ag-Cu, eingebettet. Diese bilden das eigentliche Lotmaterial.

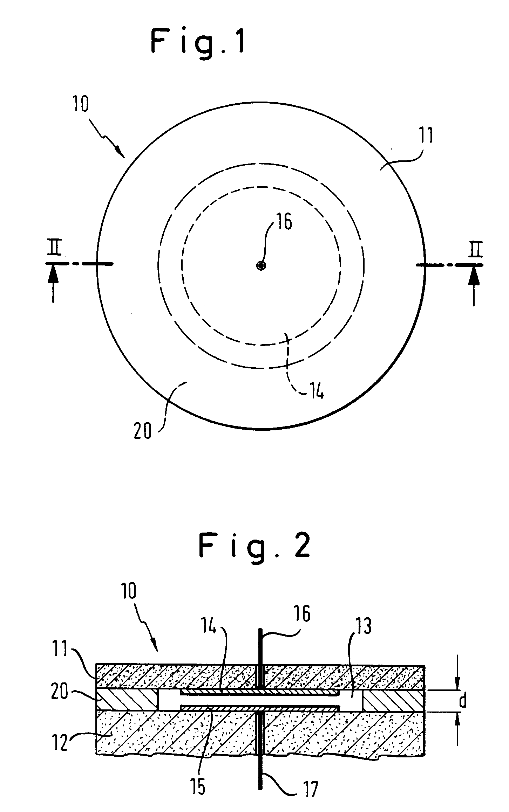

Moderne Aktivlot-Legierungen sind duktil und enthalten zwischen 2 bis 5 % Ti, das homogen in einer Matrix von z.B. Ag-Cu eingebettet ist. Diese Legierungen können wie normale Hartlote zu beliebigen Formteilen ausgebildet werden, also auch zu dem in Fig. 2 dargestellten, als Abstandshalter dienenden ringförmigen Formteil 20.

Typische im Handel befindliche Aktivlote sind die Legierungen Ag-Ti, Ag-Cu-Ti und Ag-Cu-In-Ti, deren Löttemperaturen zwischen 750 und 1000°C liegen. Stufenlötungen (Abstufungen in den Schmelzpunkten) sind also auch bei Aktivloten möglich. Die Festigkeiten der Aktivlote sind identisch zu den Festigkeiten vergleichbarer Ti-freier Hartlote. Die Haftfestigkeit zur Keramik ist größer als die Festigkeit der Keramik selbst; im Zugversuch liegt daher der Bruch in der Keramik, nicht in der Grenzschicht Keramik-Lot.

Die Verbindung der Keramikteile mit Aktivlote erfolgt vorzugsweise im Vakuum bei mindestens 10⁻⁵ mbar, besser im Bereich von 10⁻⁶ mbar. Sehr gutes Vakuum ist erforderlich, um Reaktionen des Ti mit dem Restgas zu vermeiden und eine gute Benetzung der Keramik zu erreichen.

Zur Erzielung bestimmter Lötergebnisse, beispielsweise zur Verminderung des Abdampfens des Lotes oder zur Reduktion von Oberflächenoxiden, kann es zweckmäßig sein, den Aufheiz- bzw. Lötvorgang in einer definierten Gasatmosphäre aus inertem Gas und/oder Reaktivgas vorzunehmen. Die Partialdrücke dieser Gase liegen vorzugsweise unter 10⁻¹ mbar.

Wie beim üblichen Löten wird auch beim Aktivlöten das Lot vollständig durchgeschmolzen. Die Löttemperatur muß aber beim Aktivlot zweckmäßigerweise 70 bis 100°C über der Liquidustemperatur liegen, damit eine optimale Reaktion des Ti mit der Keramik erhalten wird. Dadurch wird eine hohe Festigkeit und Vakuumdichtigkeit erzielt.

### 2. DCB-Verfahren

Die Anwendung des DCB-Verfahrens setzt voraus, daß die Membran 11 und der Grundkörper 12 aus Oxidkeramik oder Saphir bestehen. In diesem Fall besteht das ringförmige Formteil 20 aus Kupfer. Nachdem das Kupfer-Formteil 20 zwischen dem Grundkörper 12 und der Membran 11 angeordnet ist, wird diese Anordnung in einer Inertgasatmosphäre, beispielsweise aus Argon oder Stickstoff, mit geringen Anteilen von Sauerstoff (z.B. 500 ppm) auf 1070°C aufgeheizt. Dabei bildet sich auf der Oberfläche des Kupfer-Formteils Cu₂O. Kupfer bildet mit Cu₂O bei 1065°C eine eutektische Schmelze, was bedeutet, daß die Oberfläche des Kupfer-Formteils aufgeschmolzen wird. Die Schmelze reagiert mit der Oberfläche der Keramikteile und benetzt sie. Wenn beispielsweise die Keramikteile aus einer Aluminiumoxidkeramik (Al₂O₃) bestehen, erfolgt hierbei eine Reaktion des Cu₂O mit Al₂O₃ zu CuAlO₂. Die Benetzung der Keramikoberfläche und des Kupfer-Formteils ist sehr gut, so daß nach Abkühlung eine äußerst haftfeste Verbindung zwischen dem Kupfer-Formteil und der Keramik vorliegt.

Im Temperaturbereich zwischen 1065°C und 1083°C herrscht Gleichgewicht zwischen festem Kupfer und der eutektischen Schmelze. Das Kupfer-Formteil wird also im Inneren nicht aufgeschmolzen und behält deswegen bis zum Schmelzpunkt des Kupfers (1083°C) seine Form bei. Die Dicke der eutektischen Reaktionsschicht beträgt beispielsweise 5 bis 10 µm.

## Patentansprüche

1. Drucksensor mit einem Grundkörper (12) und einer Membran (11), die unter Bildung einer Kammer (13) in einem definierten Abstand (d) parallel zueinander zusammengefügt sind, wobei wenigstens eines der beiden zusammengefügten Teile aus Keramik, Glas, Metall oder einem einkristallinen Material besteht, **dadurch gekennzeichnet,** daß der Grundkörper (12) und die Membran (11) durch ein zugleich als Abstandshalter dienendes Formteil (20) aus Aktivlot oder Kupfer thermisch miteinander verbunden sind.

2. Drucksensor nach Anspruch 1, **dadurch gekennzeichnet,** daß das Aktivlot eine Silber-Kupfer-Legierung ist, die als reaktives Element Titan enthält.

3. Drucksensor nach Anspruch 1, **dadurch gekennzeichnet,** daß die beiden zusammengefügten Teile (11, 12) aus Oxidkeramik oder Saphir bestehen und daß das Formteil (20) aus Kupfer besteht, das durch eine sich an der Oberfläche ausbildende eutektische Schmelze mit den beiden Teilen verbunden ist.

4. Drucksensor nach einem der vorhergehenden Ansprüche, **dadurch gekennzeichnet,** daß das Formteil (20) ein die Kammer (13) umschließender Ring ist.

5. Drucksensor nach einem der vorhergehenden Ansprüche, **dadurch gekennzeichnet,** daß die einander zugewandten Flächen des Grundkörpers (12) und der Membran (11) eben sind und daß der Abstand (d) zwischen dem Grundkörper (12) und der Membran (11) ausschließlich durch das dazwischen angeordnete Formteil (20) bestimmt ist.

6. Verfahren zum Herstellen eines Drucksensors nach Anspruch 1 oder 2 mit einem Formteil (20) aus Aktivlot, **dadurch gekennzeichnet,** daß der Grundkörper (12) und die Membran (11) ohne vorhergehende Metallisierung mit dem dazwischen angeordneten Formteil (20) in ein Vakuum gebracht und darin bis zum vollständigen Durchschmelzen des Aktivlots erhitzt werden.

7. Verfahren nach Anspruch 6, **dadurch gekennzeichnet,** daß das Vakuum einen Restgasdruck von weniger als 10⁻⁵ mbar hat.

8. Verfahren zum Herstellen eines Drucksensors nach Anspruch 1 oder 2 mit einem Formteil (20) aus Aktivlot, **dadurch gekennzeichnet,** daß der Grundkörper (12) und die Membran (11) ohne vorhergehende Metallisierung mit dem dazwischen angeordneten Formteil (20) in eine definierte Gasatmosphäre mit einem Druck von höchstens 0,1 mbar gebracht und darin bis zum vollständigen Durchschmelzen des Aktivlots erhitzt werden.

9. Verfahren nach Anspruch 8, **dadurch gekennzeichnet,** daß die Gasatmosphäre aus einem inerten Gas besteht.

10. Verfahren nach Anspruch 8, **dadurch gekennzeichnet,** daß die Gasatmosphäre aus einem Reaktivgas besteht.

11. Verfahren nach Anspruch 8, **dadurch gekennzeichnet,** daß die Gasatmosphäre aus einem Gemisch von inerten und/oder reaktiven Gasen besteht.

12. Verfahren zum Herstellen eines Drucksensors nach Anspruch 3, **dadurch gekennzeichnet,** daß der Grundkörper (12) und die Membran (11) ohne vorhergehende Metallisierung mit dem dazwischen angeordneten Formteil (20) in eine Inertatmosphäre mit geringem Sauerstoffanteil gebracht und darin bis auf eine Temperatur erhitzt werden, die unter dem Schmelzpunkt von Kupfer liegt und bei der sich an der Oberfläche des Formteils eine eutektische Schmelze bildet.

13. Verfahren nach Anspruch 12, **dadurch gekennzeichnet,** daß die Teile auf eine Temperatur von etwa 1070°C erhitzt werden.

14. Verfahren nach Anspruch 12 oder 13, **dadurch gekennzeichnet,** daß die Inertatmosphäre aus Argon oder Stickstoff besteht.

15. Verfahren nach einem der Ansprüche 12 bis 14, **dadurch gekennzeichnet,** daß der Sauerstoffanteil der Inertatmosphäre etwa 500 ppm beträgt.

## Claims

1. Pressure sensor comprising a base body (12) and a diaphragm (11) which are assembled at a defined distance (d) apart parallel to each other to form a chamber (13), at least one of the two assembled parts consisting of ceramic, glass, metal or a monocrystalline material, characterized in that the base body (12) and the diaphragm (11) are thermally joined together by a shaped part (20) of active solder or copper.

2. Pressure sensor according to claim 1, characterized in that the active solder is a silver-copper alloy which contains titanium as reactive element.

3. Pressure sensor according to claim 1, characterized in that the two joined parts (11, 12) consist of oxide ceramic or sapphire and that the shaped part (20) consists of copper which is bonded to the two parts by a eutectic melt forming at the surface.

4. Pressure sensor according to any one of the preceding claims, characterized in that the shaped part (20) is a ring enclosing the chamber (13).

5. Pressure sensor according to any one of the preceding claims, characterized in that the facing surfaces of the base body (12) and the diaphragm (11) are planar and that the distance (d) between the base body (12) and the diaphragm (11) is determined solely by the shaped part (20) disposed therebetween.

6. Method of manufacturing a pressure sensor according to claim 1 or 2 with a shaped part (20) of active solder, characterized in that the base body (12) and the diaphragm (11) without previous metallization and with the shaped part (20) of active solder disposed therebetween are introduced into a vacuum and heated therein until complete melting through of the active solder.

7. Method according to claim 6, characterized in that the vacuum has a residual gas pressure of less than 10⁻⁵ mbar.

8. Method of manufacturing a pressure sensor according to claim 1 or 2 with a shaped part (20) of active solder, characterized in that the base body (12) and the diaphragm (11) without previous metallization and with the shaped part (20) of active solder disposed therebetween are introduced into a defined gas atmosphere with a pressure of at the most 0.1 mbar and heated therein until complete melting through of the active solder.

9. Method according to claim 8, characterized in that the gas atmosphere consists of an inert gas.

10. Method according to claim 8, characterized in that the gas atmosphere consists of a reactive gas.

11. Method according to claim 8, characterized in that the gas atmosphere consists of a mixture of inert and/or reactive gases.

12. Method of manufacturing a pressure sensor according to claim 3, characterized in that the base body (12) and the diaphragm (11) without previous metallization and with the shaped part (20) of copper disposed therebetween are introduced into an inert atmosphere with low oxygen content and heated therein to a temperature which lies beneath the melting point of copper and at which a eutectic melt forms at the surface of the shaped part.

13. Method according to claim 12, characterized in that the parts are heated to a temperature of about 1070°C.

14. Method according to claim 12 or 13, characterized in that the inert atmosphere consists of argon or nitrogen.

15. Method according to any one of claims 12 to 14, characterized in that the oxygen content of the inert atmosphere is about 500 ppm.

## Revendications

1. Capteur de pression comportant un corps de base (12) et une membrane (11), qui sont réunis à une distance définie (d) l'un de l'autre et de manière à être parallèles l'un à l'autre, en formant une chambre (13), au moins l'une des deux pièces réunies étant réalisée en céramique, en verre, en métal ou en un matériau monocristallin, caractérisé en ce que le corps de base (12) et la membrane (11) sont reliés l'un à l'autre par voie thermique, au moyen d'une pièce de forme (20) en brasure active ou en cuivre, faisant simultanément office d'entretoise.

2. Capteur de pression selon la revendication 1, caractérisé en ce que la brasure active est un alliage cuivre-argent renfermant du titane en quise d'élément réactif.

3. Capteur de pression selon la revendication 1, caractérisé en ce que les deux pièces réunies (11, 12) sont réalisées en céramique d'oxyde ou en saphir, et en ce que la pièce de forme (20) est réalisée en cuivre, qui est reliée aux deux pièces par un bain eutectique se formant à la surface.

4. Capteur de pression selon l'une des revendications précédentes, caractérisé en ce que la pièce de forme (20) est une bague entourant la chambre (13).

5. Capteur de pression selon l'une des revendications précédentes, caractérisé en ce que les surfaces se faisant face du corps de base (12) et de la membrane (11) sont planes, et en ce que la distance (d) entre le corps de base (12) et la membrane (11) est exclusivement déterminée par la pièce de forme (20) disposée entre-eux.

6. Procédé de fabrication d'un capteur de pression selon la revendication 1 ou 2, comprenant une pièce de forme (20) en brasure active, caractérisé en ce que le corps de base (12) et la membrane (11) sont amenés, sans métallisation préalable et avec la pièce de forme (20) disposée entre-eux, dans un vide et y sont chauffés jusqu'à la fusion totale de la brasure active.

7. Procédé selon la revendication 6, caractérisé en ce que le vide possède une pression de gaz résiduelle de moins de 10⁻⁵ mbar.

8. Procédé de fabrication d'un capteur de pression selon la revendication 1 ou 2, comprenant une pièce de forme (20) en brasure active, caractérisé en ce que le corps de base (12) et la membrane (11) sont amenés, sans métallisation préalable et avec la pièce de forme (20) disposée entre-eux, dans une atmosphère de gaz définie, d'une pression d'au plus 0,1 mbar, et y sont chauffés jusqu'à la fusion totale de la brasure active.

9. Procédé selon la revendication 8, caractérisé en ce que l'atmosphère de gaz est constituée d'un gaz inerte.

10. Procédé selon la revendication 8, caractérisé en ce que l'atmosphère de gaz est constituée d'un gaz réactif.

11. Procédé selon la revendication 8, caractérisé en ce que l'atmosphère de gaz est constituée d'un mélange de gaz inertes et/ou de gaz réactifs.

12. Procédé de fabrication d'un capteur de pression selon la revendication 3, caractérisé en ce que le corps de base (12) et la membrane (11) sont amenés, sans métallisation préalable et avec la pièce de forme (20) disposée entre-eux, dans une atmosphère inerte à faible teneur en oxygène, et y sont chauffés jusqu'à une température se situant en-dessous du point de fusion du cuivre et pour laquelle se forme un bain eutectique à la surface de la pièce de forme.

13. Procédé selon la revendication 12, caractérisé en ce que les pièces sont chauffées à une température d'environ 1070°C.

14. Procédé selon la revendication 12 ou 13, caractérisé en ce que l'atmosphère inerte est constituée d'argon ou d'azote.

15. Procédé selon l'une des revendications 12 à 14, caractérisé en ce que la teneur en oxygène de l'atmosphère inerte vaut environ 500 ppm.
